Europäisches Patentamt

(19) European Patent Office

Office européen des brevets

(11) Veröffentlichungsnummer: **0 145 645**
**B1**

(12) **EUROPÄISCHE PATENTSCHRIFT**

(45) Veröffentlichungstag der Patentschrift: **25.07.90**

(21) Anmeldenummer: **84730129.8**

(22) Anmeldetag: **30.11.84**

(51) Int. Cl.⁵: **F 16 G 11/12**

(54) Spannvorrichtung für Spannstränge, insbesondere Ketten oder Gurte.

(30) Priorität: **06.12.83 DE 3344486**

(43) Veröffentlichungstag der Anmeldung:
**19.06.85 Patentblatt 85/25**

(45) Bekanntmachung des Hinweises auf die
Patenterteilung:
**25.07.90 Patentblatt 90/30**

(84) Benannte Vertragsstaaten:
**AT CH DE GB IT LI SE**

(56) Entgegenhaltungen:
**FR-A-2 407 097**
**US-A-2 993 680**
**US-A-3 175 806**

(73) Patentinhaber: **RUD-Kettenfabrik Rieger & Dietz
GmbH u. Co.
Friedensinsel
D-7080 Aalen 1 (DE)**

(72) Erfinder: **Speich, Helmut
Filderweg 26
D-7081 Hwttlingen (DE)**

(74) Vertreter: **Böning, Manfred, Dr. Ing. et al
Patentanwälte Dipl.-Ing. Dieter Jander Dr. Ing.
Manfred Böning Kurfürstendamm 66
D-1000 Berlin 15 (DE)**

Courier Press, Leamington Spa, England.

EP 0 145 645 B1

**Beschreibung**

Die Erfindung betrifft eine Spannvorrichtung nach dem Oberbegriff des Patentanspruches 1.

Aus der US—A—2 993 680 ist eine Spannvorrichtung der in Betracht gezogenen Gattung bekannt, deren eines Ende einen Haken formt und deren anderes Ende ein Antriebselement für einen Gurt aufweist, das durch einen Schwenkhebel über eine Antriebsklinke und eine Klinkenrad in Drehung versetzbar ist. Die Anordnung des Schwenkhebels gegenüber den übrigen Teilen der Spannvorrichtung gestattet es dem Benutzer dieser Spannvorrichtung, beim Spannen sein Körpergewicht einzusetzen, so daß insoweit die Voraussetzungen für die Aufbringung großer Spannkräfte gegeben werden. Bei der bekannten Vorrichtung liegen der für den Kraftangriff maßgebliche Scheitelpunkt des Hakenmaules und der vom Antriebselement abgehende Gurt indes in verschiedenen Ebenen gegenüber der Auflagefläche der Spannvorrichtung an einem zu verzurrenden Gut. Diese bedeutet, daß die bekannte Vorrichtung unter der Einwirkung von Spannkräften zum Verkanten neigt und senkrecht zur Auflagefläche gerichtete Querkräfte auftreten, die bei empfindlichen Gütern zu deren Beschädigung führen können. Abgesehen hiervon vermag die bekannte Spannvorrichtung auch insofern nicht voll zu befriedigen, als bei ihr die Krafteinleitung in die Klinkenräder über Antriebsklinken erfolgt, die schwenkbar auf am Schwenkhebel befestigten Zapfen gelagert sind, deren Festigkeit den zu übertragenden Kräften Grenzen setzt.

Eine günstigere Antriebsklinkenanordnung zeigt die FR—A—2 407 097. Bei der in dieser Druckschrift offenbarten Gurtratsche ist die Antriebsklinke hin- und herverschiebbar im Schwenkhebel gelagert. Wenn der Höhe der aufbringbaren Spannkraft auch hier Grenzen gesetzt sind, so deshalb, weil zum Spannen des Spannstranges das freie Ende des Spannhebels von der Spannvorrichtung wegbewegt werden muß und diese Art der Kraftleitung sich aus ergonomischer Sicht als unzweckmäßig erweist.

Der Erfindung liegt die Aufgabe zugrunde, eine Spannvorrichtung der in Betracht gezogenen Gattung zu schaffen, mit der sich sehr hohe Spannkräfte aufbringen lassen und bei der darüber hinaus sichergestellt ist, daß keine Beschädigungen von mit der Spannvorrichtung verzurrbaren Gütern durch Kräfte auftreten, die schräg bzw. senkrecht zur Auflagefläche der Spannvorrichtung gerichtet sind.

Die der Erfindung zugrundeliegende Aufgabe wird durch die Merkmale des kennzeichnenden Teiles des Patentanspruches 1 gelöst.

Die erfindungsgemäße Spannvorrichtung bietet den Vorteil, daß die unter Einsatz des Körpergewichtes in den Spannstrang einleitbaren hohen Spannkräfte auch nach Beendigung des Spannvorganges aufrechterhalten bleiben. Außerdem wird erreicht, daß auch während des Spannvorganges ein Verkanten der Spannvorrichtung durch schräg zu ihrer Auflagefläche in sie eingeleitete Kräfte vermieden und daraus resultierende Beschädigungen zu verzurrender Güter verhindert werden.

Um die hohen erzielten Vorspannkräfte auch in möglichst voller Größe erhalten zu können, empfiehlt es sich, den Sperrmechanismus der Spannvorrichtung im Sinne der Patentansprüche 2 bis 4 auszubilden.

Um sicherzustellen, daß das zu verzurrende Gut beim Spannen des Spannstranges durch die Spannvorrichtung nicht beschädigt wird, erweist sich eine Ausbildung der Spannvorrichtung gemäß Anspruch 5 als vorteilhaft.

Weitere Einzelheiten und Merkmale der erfindungsgemässen Spannvorrichtung ergeben sich aus den übrigen Unteransprüchen und der nachfolgenden Beschreibung sowie den beigefügten Figuren.

Es zeigen

Figur 1 eine Teilseitenansicht einer Spannvorrichtung für den Einsatz in Verbindung mit Gurten,

Figur 2 eine Teildraufsicht auf die Spannvorrichtung gemäß Figure 1,

Figur 3 einen modifizierten Anschluß der Spannvorrichtung gemäß Figure 1 und

Figur 4 einen weiteren modifizierten Anschluß der Spannvorrichtung gemäß Figur 1.

In den Figuren sind 1 und 2 Seitenwände einer Spannvorrichtung, zwischen denen ein Antriebselement 3 für einen Spannstrang 4 drehbar gelagert ist. Der Spannstrang 4 wird im dargestellten Fall von einem Gurt gebildet. Mit dem Antriebselement 3 sind drehfest zwei Klinkenräder 5 verbunden, die mit einer Vielzahl von lastorientierten Rastzähnen 6 versehen sind. Um die Drehachse des Antriebselementes ist auf diesem schwenkbar ein Schwenkhebel 7 gelagert. Im Schwenkhebel 7 ist gegen die Wirkung einer Feder 8 verschiebbar eine Antriebsklinke 9 geführt, die bei Drehung des Schwenkhebels im Uhrzeigersinn das Klinkenrad 5 mitnimmt.

10 und 11 sind zwei schieberartig ausgebildete einen Sperrmechanismus formende Sperrelemente. Das Sperrelement 10 stützt sich über eine Feder 12 und das Sperrelement 11 über zwei Federn 13 gegen ein Joch 14 ab.

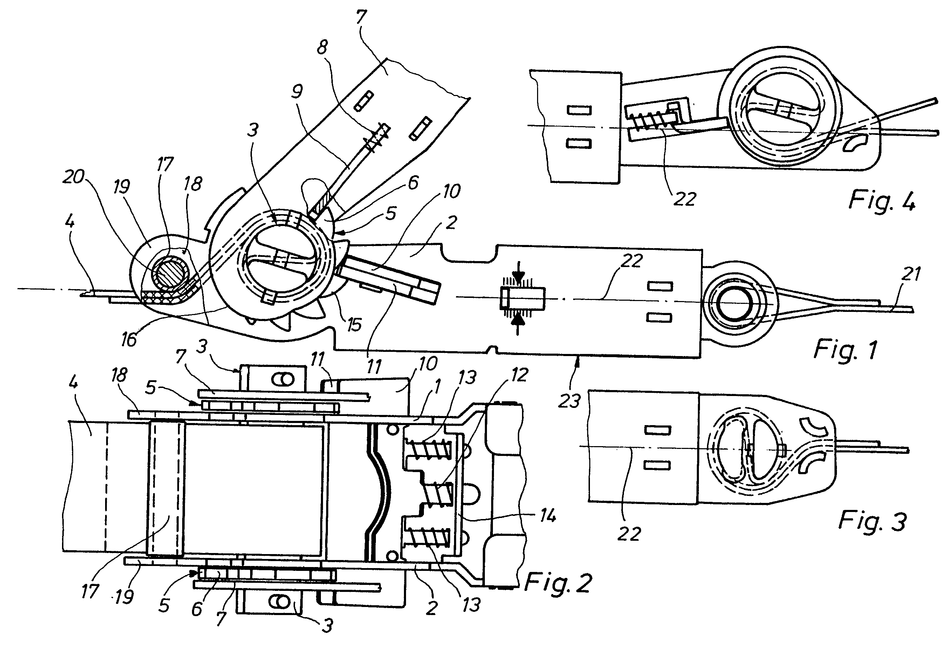

Wie aus Figur 1 deutlich erkennbar ist, sind die Rastzähne 6 der beiden beidseits der Seitenwände 1 und 2 angeordnete Klinkenräder 5 so geformt, daß des Zahndrücken 15 des in der Sperrstellung der Klinkenräder 5 jeweils mit dem Sperrmechanismus 10, 11 in Eingriff stehenden Rastzahnes 6 dem nicht dargestellten freien Ende des Schwenkhebels 7 abgewandt ist. Mit anderen Worten ausgedrückt bedeutet dies, daß das gegen die Rastfläche eines Rastzahnes 6 anliegende Sperrelement 10 oder 11 zwischen der Rastfläche und dem Schwenkhebel 7 zu liegen kommt, wenn dieser sich in der Ruhestellung befindet.

Mit 16 sind mit dem Schwenkhebel 7 verbundene bzw. von diesem gebildete Steuerkurven bezeichnet, die es gestatten, die Sperrelemente 10 und 11 gemeinsam aus den Lücken der Rastzähne 6 der Klinkenräder 5 herauszubewegen.

Im Abstand vom Antriebselement 3 der Spannvorrichtung ist ein Führungsorgan 17 ür den mit dem Antriebselement 3 verbundenen Spannstrang 4 angeordnet. Das Führungsorgan 17 wird wie das Antriebselement 3 in den Seitenwänden 1 und 2 der Spannvorrichtung gehalten. Diese ist zu diesem Zweck mit gabelartigen Verlängerungen 18 und 19 versehen. Das Führungsorgan 17 besteht vorzugsweise aus einer auf einem Bolzen 20 drehbar gelagerten Hülse.

Das Führungsorgan ist derart positioniert, daß die durch den Spannstrang 4 und den weiteren mit der Spannvorrichtung verbundenen Spannstrang 21 in die Spannvorrichtung eingeleiteten Kräfte längs einer Linie 22 wirksam werden, die im wesentlichen parallel zu einer Auflagefläche 23 verläuft, mit der sich die Spannvorrichtung gegen eine Last anlegen kann, wenn sie zum Niederzurren der Last eingesetzt wird. Wie die Figuren 3 und 4 erkennbar machen, hängt die Lage der Linie 22 von der Ausbildung des zweiten Spannstranganschlusses der Spannvorrichtung ab.

## Patentansprüche

1. Spannvorrichtung für Spannstränge (4, 21), insbesondere Ketten oder Gurte, mit einem eine zu ihrer Abstützung an einer zu verzurrenden Last dienende Auflagefläche (23) aufweisenden Anschlußteil, mit einem zum Spannen eines Spannstranges (4) dienenden drehbar in Seitenwänden des Anschlußteiles gelagerten Antriebselement (3), mit mindestens einem drehfest mit dem Antriebselement (3) verbundenen, richtungsorientierte Rastzähne (6) aufweisenden Klinkenrad (5) sowie mit einem zum Einleiten der Drehbewegung in das Antriebselement (3) dienenden Schwenkhebel (7), an dem eine mit dem Klinkenrad (5) zusammenwirkende Antriebsklinke (9) gegen die Wirkung einer Feder (8) bewegbar gelagert ist und der mit mindestens einer Steuerkurve (16) zum Überführen eines dem Klinkenrad (5) zugeordneten Sperrmechanismus (10, 11) in eine unwirksame Stellung versehen ist, wobei die Zähne (6) des Klinkenrades (5) so geformt sind, daß sie bei Bewegung des Schwenkhebels (7) in eine Richtung durch den Sperrmechanismus (10, 11) festgehalten werden, während sie bei der Bewegung des Schwenkhebels (7) in die Gegenrichtung von diesem über die Antriebsklinke (9) mitgenommen werden und wobei Anschlußteil, Antriebselement (3), Klinkenrad (5), Sperrmechanismus (10, 11) und Schwenkhebel (7) so angeordnet sind, daß der Spannstrang (4) unter Einsatz des Körpergewichtes des Benutzers durch eine Bewegung des Schwenkhebels (7) zum Anschlußteil spannbar ist, dadurch gekennzeichnet, daß auf der dem Spannstrang (4) zugewandten Seite der Spannvorrichtung im Abstand vom Antriebselement (3) in gabelartigen Verlängerungen (18, 19) der Seitenwände (1, 2) des Anschlußteiles ein Führungsorgan (17) für den Spannstrang (4) angeordnet ist, das derart positioniert ist, daß die durch den mit einer hin- und herverschiebbaren Antriebsklinke (9) versehenen Schwenkhebel (7) in die Spannvorrichtung eingeleiteten und von dieser auf den Spannstrang (4) übertragenen Spannkräfte im wesentlichen parallel zur Auflagefläche (23) der Spannvorrichtung gerichtet sind.

2. Spannvorrichtung nach Anspruch 1, dadurch gekennzeichnet, daß der Sperrmechanismus (10, 11) mehrere einzeln mit den Rastzähnen (6) des Klinkenrades (5) in Eingriff bringbare Sperrelemente (10, 11) aufweist.

3. Spannvorrichtung nach Anspruch 1 oder 2, dadurch gekennzeichnet, daß die Sperrelemente (10, 11) durch am Schwenkhebel (7) angeordnete Steuerkurven (16) gemeinsam aus den Lücken der Rastzähne (6) des Klinkenrades (5) herausbewegbar sind.

4. Spannvorrichtung nach einem der Ansprüche 1 bis 3, dadurch gekennzeichnet, daß die Sperrelemente (10, 11) von gegen die Wirkung von Federn (12, 13) hin- und herbewegbaren Schiebern gebildet sind.

5. Spannvorrichtung nach einem der Ansprüche 1 bis 4, dadurch gekennzeichnet, daß das Führungsorgan (17) drehbar ist.

## Revendications

1. Dispositif tendeur pour éléments de serrage (4, 21), en particulier chaînes ou sangles, comportant une pièce de raccordement présentant une surface d'appui (23) servant à la charge à amarrer; un élément d'entraînement (3) logé à rotation dans des parois latérales de la pièce de raccordement et servant à tendre un élément de serrage (4), au moins une roue à cliquets (5) solidarisée avec l'élément d'entraînement (3) et présentant des dents d'accrochage (6) orientées en direction, et un levier pivotant (7) qui sert à introduire le mouvement de rotation dans l'élément d'entraînement (3), sur lequel un cliquet d'entraînement (9) coopérant avec la roue à cliquets (5) est fixé en étant mobile contre l'effet d'un ressort (8) et qui est muni d'au moins une courbe de commande (16) destinée à faire passe un mécanisme de verrouillage (10, 11) adjoint à la roue à cliquet (5) dans une position inactive, les dents (6) de la roue à cliquets (5) étant conformées de telle manière qu'elle soient maintenues par le mécanisme de verrouillage (10, 11) lors du mouvement du levier pivotant (7) dans une direction, alors que, lors du mouvement du levier pivotant (7) dans la direction opposée, elles sont entraînées par ce dernier par l'intermédiaire du cliquet d'entraînement (9), la pièce de raccordement, l'élément d'entraînement (3), la roue à cliquets (5), le même mécanisme de verrouillage (10, 11) et le levier pivotant (7) étant disposés de telle manière que l'élément de serrage (4) peut être tendu en utilisant le poids de l'utilisateur au moyen d'un déplacement du levier pivotant (7) vers la pièce de raccordement, caractérisé en ce que, du côté du dispositif de serrage faisant face à l'élément de serrage (4), à distance de l'élément d'entraînement (3), on dispose un organe de guidage (17) destiné à l'élément de serrage (4) dans des prolongements (18, 19) en forme de fourches des parois latérales (1, 2) de la pièce de raccordement, ledit organe de guidage (17) étant positionné de telle manière que les forces de serrage qui sont introduites dans le dispositif de serrage grâce au levier pivotant (7) muni d'un cliquet d'entraînement (9) pouvant coulisser en va-et-vient et qui sont transmises par le dispositif de serrage sur l'élément de serrage (4) sont dirigées essentiellement parallèlement à la surface d'appui (23) du dispositif de serrage.

2. Dispositif de serrage selon la revendication 1, caractérisé en ce que le mécanisme de verrouillage (10, 11) présente plusieurs éléments de verrouillage (10, 11) pouvant être amenés séparément en prise avec les dents d'accrochage (6) de la roue à cliquets (5).

3. Dispositif de serrage selon la revendication 1 ou 2, caractérisé en ce que les éléments de verrouillage (10, 11) peuvent être dégagés simultanément des creux des dents d'accrochage (6) au moyen de courbes de commandes (16) disposées sur le levier pivotant (7).

4. Dispositif de serrage selon l'une des revendications 1 à 3, caractérisé en ce que les éléments de verrouillage (10, 11) sont constitués de coulisseaux déplaçables selon un mouvement de va-et-vient contre l'action de ressorts (12, 13).

5. Dispositif de serrage selon l'une des revendications 1 à 4, caractérisé en ce que l'organe de commande (17) est pivotant.

**Claims**

1. A device for tensioning lines (4, 21), more particularly chains or belts, comprising a connecting part having a bearing surface (23) for bearing on a load to be secured, and comprising a drive component (3) used for tensioning a tension line (4) and rotatably mounted in side walls of the connecting part, at least one ratchet wheel (5) non-rotatably connected to the drive component (3) and having directionally-oriented teeth (6), and a rocking lever (7) for imparting rotations to the drive component (3), a drive pawl (9) movable against the action of a spring (8) and cooperating with the ratchet wheel (5) being mounted on the lever (7), and the lever comprising at least one cam (16) by means of which a locking mechanism (10, 11) associated with the ratchet wheel (5) is changed over to an inoperative position, the teeth (6) of the ratchet wheel (5) being shaped so that when the rocking lever (7) moves in one direction they are secured by the locking mechanism (10, 11) whereas when the lever (7) moves in the opposite direction it entrains the teeth via the drive pawl (9), and the connecting part, the drive component (3), the ratchet wheel (5), the locking mechanism (10, 11) and the rocking lever (7) are disposed so that the tension line (4) can be tensioned by a movement of the rocking lever (7) towards the connecting part, making use of the operator's body weight, characterised in that a guide means (17) for the tension line (4) is disposed in fork-like prolongations (18, 19) of the side walls (1, 2) of the connecting part at a distance from the drive component (3) on the side of the tensioning device facing the tension line (4), the guide means being positioned so that the tensioning forces introduced into the tensioning device by the rocking lever (7), which comprises a reciprocatable drive pawl (9), and transferred from the tensioning device to the tension line (4), are directed substantially parallel to the bearing surface (23) of the tensioning device.

2. A tensioning device according to claim 1, characterised in that the locking mechanism (10, 11) comprises a number of locking components (10, 11) which can individually be brought into engagement with the teeth (6) of the ratchet wheel (5).

3. A tensioning device according to claim 1 or 2 characterised in that the locking components (10, 11) can be simultaneously moved out of the gaps between the teeth (6) of the ratchet wheel (5) by cams (16) disposed on the gocking lever (7).

4. A tensioning device according to any of claims 1 to 3, charcterised in that the locking components (10, 11) are slides movable in reciprocating against the action of springs (12, 13).

5. A tensioning device according to any of claims 1 to 4, characterised in that the guide means (17) is rotatable.

Fig. 4

Fig. 1

Fig. 3

Fig. 2